# EUROPEAN PATENT APPLICATION

(11) **EP 2 206 683 A1**
(43) Date of publication of application: **14.07.2010**
(21) Application number: 09167450.7
(22) Date of filing: 07.08.2009
(51) Int. Cl.: C02F 1/28, C02F 103/20

(54) **Device and process for obtaining biomasses from an organic sewage, particularly a sewage of zootechnic origin**

(30) Priority: 09.01.2009 IT TO20090006
(71) Applicant: Marcopolo Engineering S.P.A. Sistemi Ecologici, 12011 Borgo S. Dalmazzo (Cuneo) (IT)
(72) Inventor: Bertolotto, Antonio, I-12011, Borgo S. Dalmazzo (Cuneo) (IT)
(74) Representative: Gallarotti, Franco

(57) **Abstract**

Described herein is a device for obtaining biomass from an organic sewage having a liquid fraction and a solid fraction, particularly a sewage of zootechnic origin. The device (1) has a load-bearing structure substantially shaped like a tower (2), with an upper tank (4) for inlet of the sewage and a lower tank (6) for collecting the liquid fraction of the sewage. The structure (2) defines, between the top tank (4) and the bottom tank (6), a flow-path (7) along which the sewage can flow. Along the flow-path (7) are sequentially housed a plurality of drawer containers (3a-3e), each of which has a bottom provided with openings of dimensions such as to withhold a flaking material that constitutes a corresponding filtering mass. The drawer containers (3a-3e) extend substantially parallel to one another in a direction transverse to the flow-path (7) and stacked on top of one another for being traversed sequentially at least by the liquid fraction of the sewage. The drawer containers (3a-3e) can be slid out of the structure (2) to enable removal and replacement of the filtering masses each time saturated, as well as the variation of the position in height of the drawer containers (3a-3e) within the flow-path (7).

## Description

### Field of the invention

The present invention relates in general to devices and processes for depuration of organic sewage, particularly sewage of zootechnic origin having a high liquid component or fraction, such as pig sewage, aimed at obtaining and/or enriching biomasses.

More particularly, the invention relates to a device and to a process designed to reduce nitrates and other excess elements which are negative in the use, in agriculture, of zootechnic sewage, especially sewage resulting from pig-breeding activities, said reduction being obtained by capturing said excess elements in order to reuse them, for example in agriculture, in other forms that do not have a harmful impact on the environment.

The term "*biomass*" identifies in general any substance of organic matrix, whether vegetable or animal, that is to be used for energy purposes or for the production of agricultural amending substances or fertilizers.

### Prior art

A very widespread technique for reducing the environmental impact of zootechnic sewage is active-sludge biological depuration, with nitrification and denitrification for neutralizing the nitrates. Unfortunately, in the financial economy of intensive animal breeding, sewage depuration currently only represents costs that are difficult to amortize. Consequently, the animal-breeding sector, in particular the pig-breeding sector, calls for technologies that treat the sewage in order to recover it to obtain benefits and savings.

A technique that may potentially be used for the treatment of organic zootechnic sewage with high liquid fraction is that of its recovery with the use of biomasses, said recovery being obtainable via percolation. The technique of percolation basically consists of a filtration of the sewage through a solid substance, a biomass in the case in point. Percolation advantageously performs a process of depuration that enables reuse, for example in the agricultural sector, of the residual liquid fraction of the treated sewage, and in the case in point, enables enrichment of the original biomass. Known percolation systems are, however, designed for occupying large spaces and so far have not been adopted to a widespread extent precisely on account of the difficulty of authorization that such works require owing to the dimensions and costs that they represent.

To obtain filtering masses in a percolation process it is known to exploit the properties of the so-called flaking materials, typically represented by fibrous materials, in flakes or in fine granules. These materials, once saturated following upon the percolation process, can be used to advantage for the production of energy and of amending substances and fertilizers. Systems of a known type based upon the use of flaking materials present, however, large dimensions and are complex to produce, and are hence costly. Known systems moreover entail high levels of energy consumption and operating costs that it would be desirable to reduce.

### Summary of the invention

The aim of the present invention is basically to provide a device of the type referred to at the start of the present description, which uses in particular flaking material as a filtering mass in a percolation process, that is simple and inexpensive to produce and distinguished by a very low operating cost.

Another aim of the invention is to provide such a device that enables two biomasses to be obtained effectively, a liquid one and a solid one, starting from an organic sewage, particularly a sewage of zootechnic origin.

Another aim of the invention is to provide a said device that, albeit having contained overall dimensions, enables effective and efficient use, and that can possibly be used for the production of more complex systems.

A further aim of the invention is to provide a process of the type referred to at the start that is particularly advantageous for the purpose of obtaining biomasses of homogeneous quality, in a simple and inexpensive way.

Yet another aim of the invention is to provide such a device and such a process that advantageously enable also execution of a process of depuration for the liquid fraction of sewage at an extremely contained cost, with modest occupation of space.

Yet a further aim of the invention is to provide a process based upon the use of a flaking material as filtering mass that has the characteristics of not being a waste material but a raw material, of capturing (biological, chemical and mineral) macro- and micro-components present in the sewage, of being favourable to onset a degradative biological process, and of being totally compatible and favourable for use in the production of energy and organic fertilizers, above all for use in the growth of crops of high sanitary quality for alimentary purposes.

### Summary of the invention

The above and further aims are achieved, according to the present invention, by a device and a process for obtaining biomasses starting from an organic sewage, particularly a sewage of zootechnic origin having a high liquid component or fraction, that will present the characteristics specified in the claims. The claims form an integral part of the teaching provided herein in relation to the invention.

### Brief description of the drawings

Further purposes, characteristics and advantages of the invention will emerge from the ensuing description of a simplified embodiment of the invention, provided with reference to the annexed drawings, wherein:
- Figures 1 and 2 are schematic views, respectively in front and side elevation, of a device according to the present invention;
- Figures 3, 4, and 5 are schematic views, respectively a front view, a side view and a view from above, of a load-bearing structure of the device of Figures 1 and 2;
- Figures 6 and 7 are schematic views, respectively a front view and a view from above, of a drawer container of the device of Figures 1 and 2;
- Figure 8 is a schematic view in front elevation of a device according to a particularly advantageous embodiment of the invention; and
- Figure 9 is a schematic representation of a system comprising a plurality of apparatuses according to the present invention.

### Description of preferred embodiments of the invention

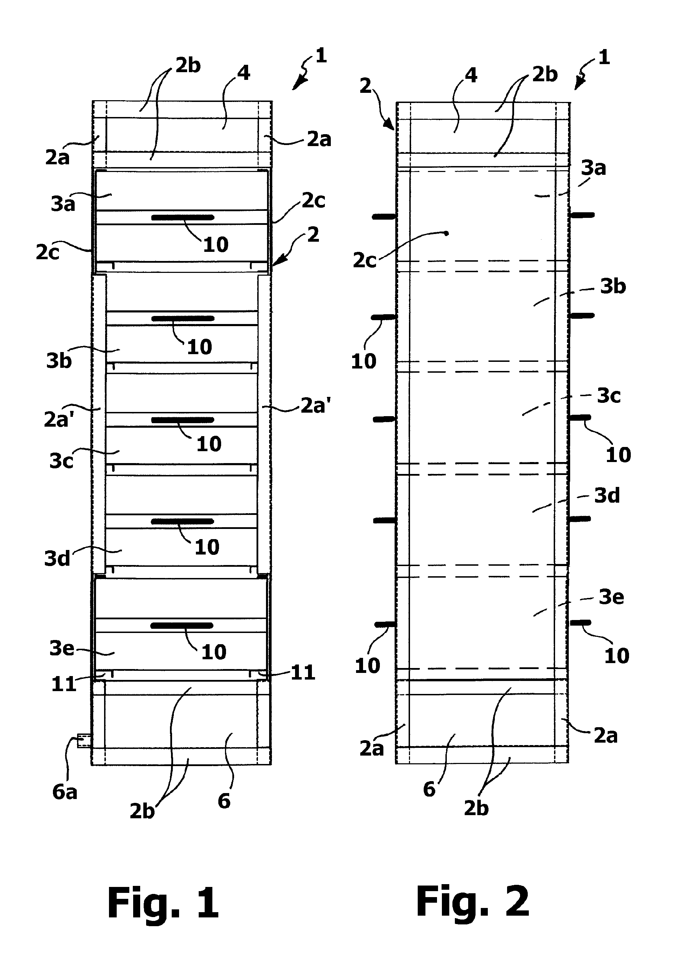

Represented schematically in Figures 1 and 2 is a device according to the present invention, designated as a whole by 1.

The device 1 is substantially configured as a tower or column, having a roughly parallelepipedal shape extending vertically. The device 1 comprises a load-bearing structure, designated by 2, within which are housed, stacked on top of one another and in a removable way, a plurality of containers 3, for respective filtering masses, not represented in the figures, preferentially constituted by flaking material. Note that in Figures 1, 2 and 8, the letters a-e are combined to the reference number 3 of the containers, to distinguish them from one another for the purposes of the ensuing description of the modes of use of the device. The device 1 has reduced overall dimensions as compared to a known traditional system. In the non-limiting example of embodiment considered herein, the device, i.e., the structure 2, has a total height of approximately 200 cm and sides of approximately 50 cm, for example approximately 52 x 50 cm, the front and rear sides being the slightly larger ones to enable insertion and extraction of the containers 3, which are substantially configured as sliding drawers.

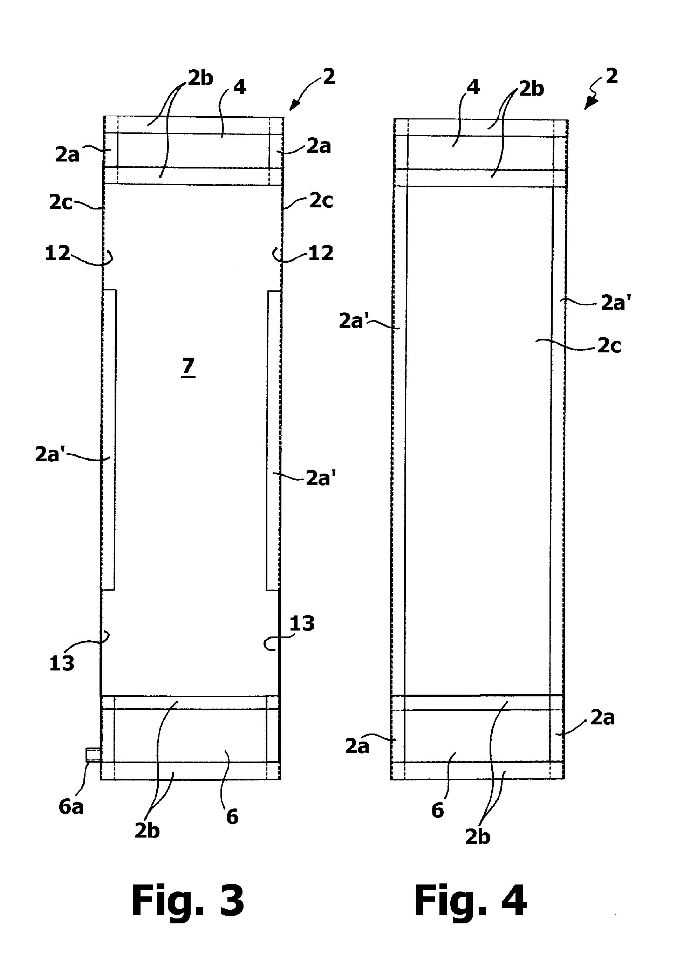

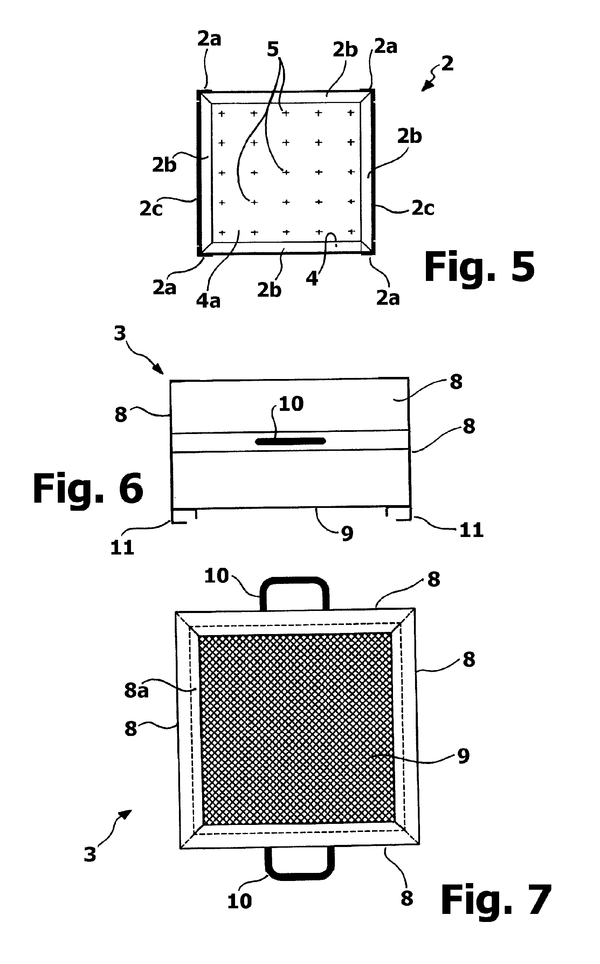

As may be seen also in Figures 3-5, the load-bearing structure 2 is provided, in its upper part, with an inlet or accumulation tank 4 for the sewage to be treated, preferentially having the top open and the bottom provided with at least one opening for outflow of the sewage. Preferentially, as may be noted from Figure 5, the bottom of the tank 4, designated by 4a, has for this purpose an array of through holes or openings 5, for substantially uniform distribution of the incoming sewage on the top area of the mass contained in an underlying drawer container, as described hereinafter. By way of indication, the tank 4 can have a height of approximately 20 cm, with the bottom 4a provided with an array of holes 5 having a diameter smaller than 5 mm, preferably from 2 to 4 mm, and even more preferably approximately 3 mm. Said sizings, with reference to the example of embodiment, enable a loading and working capacity that guarantees efficient treatment, notwithstanding the contained overall dimensions of the device forming the subject of the invention. The tank 4 can be replaced by a diffuser or distributor member, not necessarily fixed with respect to the structure 2, particularly for the case of continuous feed of the device, as in a variant described hereinafter.

The structure 2 is shaped so as to present, in its lower part, a collection tank 6, with bottom closed and top open, indicatively having a height of approximately 25 cm. The lower tank 6 is provided with an outlet coupling 6a, for evacuation of the liquid residue resulting from the process of treatment that can be implemented via the device 1, described hereinafter. In an alternative embodiment, the tank 6 can be configured as a distinct part with respect to the structure 2.

The structure 2 of Figures 3-5 is preferentially made of metal material, with a frame that comprises four angular uprights 2a and two sets of four cross members, which also have an L-shaped cross section, at the bottom and at the top of the two tanks 4 and 6; some of said cross members are designated by 2b. The bottom and the side walls of the two tanks 4 and 6 can be made of flat sheet metal. The structure 2 is completed with two lateral walls or sides, designated by 2c, so as to be open at the front and at the rear.

The space that extends between the two tanks 4 and 6, delimited laterally by the walls 2c, defines a flow-path, designated by 7 in Figure 3, within which there are operatively positioned the containers or drawers 3, stacked on top of one another, as also shown in Figure 1. In the example of embodiment considered, the flow-path 7, i.e., the area of housing of the drawers 3, can have a height of approximately 150 cm.

The drawers 3, which can vary in number, are identical to one another and have side walls 8 made of sheet metal. The bottom of the drawers, designated by 9 in Figures 6 and 7, is formed by a perforated sheet of metal or by a wire mesh, with holes or passages having a diameter or section of passage of less than 5 mm, preferably approximately 3-4 mm. Said sizings enable an efficient treatment using a flaking material, for example in the form of wafers, which is preferably used for formation of the aggregating masses used in the percolation process implemented via the device 1. Once again with reference to the example of embodiment considered, the drawers 3 can have dimensions as desired according to the space available (there is no process constraint), for example, lateral dimensions of approximately 50 cm and height of approximately 27 cm (50 x 50 x 27 cm). Preferably, the front and rear walls 8 of the drawers 3 are provided with projecting gripping means or handles 10. As may be seen in Figure 7, the top of the drawers 3 is open, with the corresponding opening that is delimited by an edge 8a of the walls 8, bent orthogonally inwards.

As may be seen in Figure 6, the drawers 3 are provided, at opposite edges of the corresponding bottom 9, with mutually parallel lower resting profiles, designated by 11, preferably made of metal. The overall height of the drawers 3, which comprises the vertical encumbrance of the profiles 11, is approximately 30 cm in the example considered in such a way that in the flow-path 7 there can be provided five drawers 3.

The drawers 3 are inserted in the flow-path 7 stacked on top of one another in order to extend in a direction transverse to the path itself and so that the sewage that flows from the tank 4 towards the tank 6 is able to traverse in sequence the filtering masses contained in the drawers themselves. In the simplest embodiment of the device 1, illustrated in the figures, the drawers 3 lie on top of one another, i.e., they are directly stacked, with the lower profiles 11 of one drawer that rest on the two opposite sides of the edge 8a (see Figure 7) of the underlying drawer of the stack. The bottom profiles 11 of the last drawer in the stack (the drawer 3e of Figures 1 and 2) instead rest on the two cross members 2b of the lower tank 6 parallel to the sides 2c.

Once again with reference to Figure 3, the uprights 2a with L-shaped section have two interruptions in the respective portion of wall that extends in a direction perpendicular to the sides 2c of the structure 2. Between these interruptions, designated by 12 and 13 in Figure 3, there then extends an intermediate stretch of the aforesaid portion of wall, designated by 2a' in Figures 1 and 3.

As may be appreciated from Figures 1-3, the aforesaid flow-path 7 identifies a plurality of positions in height for the drawers 3, and precisely five positions of lie in the example considered here. The portion of wall 2a' of the angular uprights 2a occupies, within the path 7, substantially only the intermediate positions (i.e., those corresponding to the drawers designated by 3b, 3c and 3d in Figure 1), leaving instead free the end positions, respectively the upper one and the lower one (i.e., those corresponding to the drawers 3a and 3e of Figure 1). As may be appreciated, in this way only the drawers that occupy the aforesaid upper and lower positions can be slid out of/into the structure 2.

According to a preferential characteristic of the invention, the drawers 3 are moreover housed in the structure 2 so as to be able to slide vertically within the flow-path 7, i.e., in the region comprised between the tanks 4 and 6, in order be able to vary the corresponding position of lie thereof in height, after at least one of the drawers that occupy the aforesaid upper and lower positions has been taken out of the structure. This means that, for example, if the drawer 3a that occupies the top position is removed, all the remaining drawers of the stack can be raised so that the second drawer 3b will come to occupy the upper position, and the drawer 3e will free the lower position, where the drawer 3a previously taken out can be reinserted. Of course, also the reverse is in theory possible, i.e., extraction of the drawer that occupies the bottom position (drawer 3e in Figure 1), with the remaining part of the stack of drawers that can then be dropped down one place. The portions of wall 2a' of the angular uprights 2a hence prevent extraction of the drawers 3 that each time occupy the intermediate positions, and moreover function as guide, containing possible any lateral displacements of the drawers of the stack when this, after extraction of one of the drawers, is displaced vertically.

An example of process that can be implemented with the device 1 according to the present invention is described in what follows.

The starting sewage used is, as has been said, a sewage coming from animal breeding, preferably pig breeding or possibly cattle breeding.

The sewage is preferably pre-treated via filter-press and/or via centrifugation. The sewage coming from animal breeding undergoes successive filtration, such as for example a first filtration through a filtering means designed to withhold solid particles of dimensions larger than 5 mm, a second filtration through a filtering means designed to withhold particles larger than 2.5 mm, and a third filtration through a filtering means designed to withhold particles larger than 1 mm. The above-mentioned steps of aggregation can be followed, or possibly replaced, by a forced centrifugation of the sewage.

In a possible operating mode, a dosed amount of pre-treated sewage is charged periodically into the tank 4 of the device 1, until it is substantially filled up to the top.

The sewage flows out of the tank 4, through the holes 5 of the bottom 4a, in the flow-path 7, where the drawers 3 are set in continuous sequence and each contains a respective filtering mass, having the task of capturing the macroscopic and microscopic particles of organic, chemical, and mineral substances present in the sewage that flows by gravity towards the collection tank 6. Preferably, in said filtering mass is performed an enzymatic or bacterial bio-activation of the sewage, for example via addition of a consortium of bacteria and fungi, designed to enable acceleration and control of the processes of degradation of the organic fraction of the sewage. A consortium that can be used for the purpose is the one made available by the applicant under the brand name "Enzyveba" (to the technical documentation of which the reader is referred for further details). The use of such a product is particularly advantageous in so far as the bacterial and fungal species are naturally self-selected during the production cycle, developing a consortium having a wide range of enzymatic activities, capable of acting in the presence of markedly heterogeneous matrices, and in which said bacteria and fungi contained in the microbial consortium develop the enzymes necessary for degradation of the various organic fractions with which they come into contact.

According to a preferential aspect of the invention, percolation through the filtering masses occurs in the absence of pressure of the sewage in order to prevent formation of preferential paths within the masses themselves.

In the preferred embodiment, the aggregating masses are formed with a flaking material. These materials, in addition to presenting physical and chemical properties that render them particularly suited to the application considered herein, are designed to compose, together with other organic solids and the soluble solids withheld from the sewage as it passes, a biomass that possesses a good physical structure and characteristics suitable for producing energy and a good amending agent and/or organic fertilizer. Flaking materials preferred for use in the process according to the present invention are of vegetable origin, for example selected from among maize stalks, shredded straw or hay, chopped cereals, cellulose, weeds, peat, algae, as well as waste from sawmills and timber, such as wood shavings, sawdust, bark shavings.

The flaking material, prepared in wafers, flakes, granules, pellets or the like, has dimensions larger than the diameter of the holes 5 of the bottom 4a of the drawers 4 and in any case dimensions such as to enable the drawers 3 to be filled. It has been found that the best results, in terms of formation of the biomass and of depuration of the liquid fraction of the sewage, can be obtained with an aggregating mass formed by a bed of flaking material having a height (in the direction of flow of the sewage) comprised between approximately 10 and 50 cm according to the flaking material used. Said height, or thickness, of the filtering mass moreover enables preservation of excellent physical characteristics of the biomasses obtained, also for the purposes of manual or automated movement of the drawers and of the subsequent steps of discharge of the saturated flaking material and/or movement and conveyance.

Excellent results for the production of the biomasses can be obtained by causing an enzymatic or bacterial bio-activation also of the saturated flaking material contained in the drawers 3, preferably via addition of a consortium of micro-organisms of the type referred to previously, particularly bacteria and fungi, such as the already mentioned Enzyveba.

As may be appreciated, in normal operation of the device 1, the sewage flows from the upper tank 4 towards the lower tank 6, traversing in sequence the filtering masses contained in the drawers 3, with a percolation just by gravity. The flaking material constituting the aggregating masses withholds the solid fraction of the sewage (biological, chemical, and mineral macro- and micro-components), including the part in emulsion, up to saturation thereof, whilst the corresponding liquid fraction is progressively accumulated in the tank 6, from which it can then be evacuated through the coupling 6a.

The aggregating masses are replaced cyclically when their saturation point is reached, starting from the first drawer that is traversed by the sewage in its motion of advance through the device 1, with a method of rotation that proceeds preferably from the bottom upwards. For this purpose, as explained previously, the drawer that occupies the upper position within the flow-path, i.e., the drawer 3a of Figure 1, can be removed from the structure 2. The corresponding saturated aggregating mass, designed to constitute an enriched biomass, is removed and replaced by a new bed of the flaking material. The remaining drawers 3b-3e are then translated upwards within the path 7, with the second drawer 3b that thus comes to occupy the aforesaid upper position and with the drawer 3e that frees the aforesaid lower position. A new drawer is then inserted in said bottom position, for example, but not necessarily, the drawer 3a that had been previously taken out, which contains a corresponding new filtering mass. This method of rotation of the drawers is evidently repeated cyclically so that each of the drawers, and hence of the corresponding filtering masses, will occupy in sequence all the positions within the flow-path 7, from the bottom upwards, thus guaranteeing qualitative uniformity of the biomasses obtained in the various drawers.

With the process described, by making use of a good flaking material and a highly active sewage, it is possible to obtain from the saturated filtering masses a biomass that is optimally suited for producing energy, organic fertilizers and amending substances, also compatible for entry into a possible composting cycle (decomposition of the organic material in aerobic conditions of contact between the biomass and the air). The saturated aggregating masses, enriched with carbon, can be possibly pressed and dried, for direct use as fuel for industrial purposes or else for entry into a process of anaerobic digestion with production of biogas or else in an aerobic process with or without earthworms. The residual liquid fraction that collects in the tank 6, which itself constitutes a biomass, contains an organic load, which is reduced on average by 90%, including the mineral and chemical charges, which are also reduced by approximately 90%. These waters of recovery of the process described are rich in positive microfauna and, appropriately oxidized, can also be used, for example, as nutrient for hydroponic cultures to be re-used in the anaerobic-digester process for producing energy and fertilizers and/or raw material for the pharmaceutical and cosmetic industry, or for animal feed.

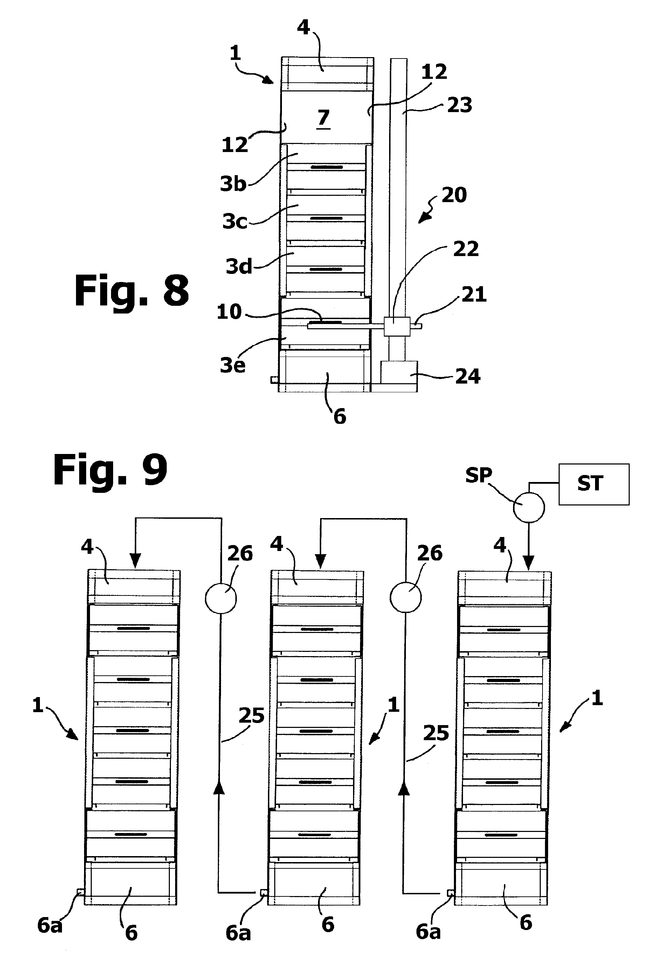

Given the relatively contained weight of the stack of drawers 3, the rotational movement described above can be carried out manually, for example by two operators, or else with the aid of machinery normally available also on animal-breeding farms of small size, such as a fork-lift truck or an agricultural tractor equipped with fork lift. On the other hand, in a particularly advantageous embodiment of the invention the device 1 is provided with means for producing the mechanized displacement of the drawer containers 3 within the flow-path 7. Figure 8 is a schematic illustration of a possible embodiment in this sense.

In the example illustrated, associated to the device 1 is a mechanized system, designated as a whole by 20, which comprises a pair of lifting arms, only one of which is visible, designated by 21, for example arms that can be divaricated and brought up to one another. In the respective position where the arms 21 are closer to one another, they are positioned underneath the handles 10 of the drawer that each time occupies the lower portion of the path 7, i.e., the drawer 3e of Figure 8. The arms 21 are sustained by a supporting member 22, slidably mounted along one or more vertical guides 23; in this way, the sliding of the supporting member 22 upwards brings about raising of the arms 21 and hence of the stack of drawers, obviously after the drawer that occupies the upper position has been previously removed, as shown in Figure 8. From the drawer previously taken out of the structure 2 the saturated filtering mass is removed and replaced with a new filtering mass. Said drawer is then reinserted in the bottom position of the flow-path, which is now free, after which the arms 21 can be again lowered via the supporting member 22 slidable along the guide means 23 and then divaricated.

In the simplest embodiment, the system 20 can be actuated manually (for example, via a handwheel-and-leadnut/wormscrew system or else a pinion/rack system), but in other solutions it is evident that a servo actuator system can be used, for example comprising an electric, hydraulic or pneumatic actuator, designated as a whole by 24 in Figure 8, provided with suitable means of supply and control, according to modalities of implementation that are clear to the person skilled in the art (for example, an electric motor with transmission system for producing raising and lowering of the supporting member 22 thereof along the guide means 23, or once again via a hydraulic or pneumatic cylinder, etc.). As may be appreciated, in fact, the modalities of practical implementation of the mechanized system of movement of the drawers of the device 1 may be of a wide range of kinds, more or less complex, according to modalities that will emerge clearly to the person skilled in the art. It is also pointed out that the mechanized system could be configured as a device that can be brought up to and moved away from the structure 2 of the device 1 (such as a fork-lift truck), and hence without the arms 21 having necessarily to be of the divaricating type.

Without prejudice to the reduced overall dimensions of the device 1 and the possibility of its use as a stand-alone unit, a number of devices 1 can be used for the production of systems of larger dimensions. Illustrated schematically in Figure 9 for this purpose is an example of use of a number of apparatuses 1 connected together in series. In this configuration of use, the outlet coupling 6a of a first device 1 is connected, via a suitable pipe 25 provided with pump 26, to the upper tank 4 of a second device 1, and the coupling 6a of the latter is connected, once again via a pipe 25 with pump 26, to the tank 4 of a further device 1. Obviously, the tanks 4 of a number of apparatuses 1 can also be filled in parallel, starting from a single tank for collection of the sewage coming from an animal-breeding farm, with modalities and means that emerge clearly to the person skilled in the art.

From the foregoing description, the characteristics and the advantages of the invention emerge clearly. The device described is extremely simple and inexpensive to produce, and its operating costs are very modest. The contained dimensions of the device enable use thereof also in animal-breeding farms of small size. The biomasses that can be obtained with the process according to the present invention have excellent characteristics in view of their use as fertilizers, amending agents, or for the production of energy. The process moreover enables, albeit with apparatuses of small dimensions, solid biomasses to be obtained having homogeneous characteristics and quality, thanks to the method of rotation of the drawers described, accompanied by very contained system and operating costs.

It is clear for the person skilled in the art that numerous variations may be made to the device and to the process described herein by way of example, without thereby departing from the scope of the invention, as defined in the ensuing claims.

In a particularly advantageous embodiment, the sewage is supplied continuously via the tank or diffuser 4. For this purpose, as illustrated schematically in Figure 9, the sewage can be taken from the input tank ST, which contains the pre-treated sewage; via a suitable duct and a supply pump SP, the sewage is carried from the tank ST to the tank or diffuser 4. Feed of the sewage to the tank 4 occurs continuously, with reduced flow-rate, and is interrupted once saturation of the mass contained in the drawer 3a is reached. Detection of saturation of the mass is obtained via a sensor (not represented), mounted preferentially but not necessarily in the bottom part of the tank 4 so as to face the inside of the top drawer. In a possible implementation, the sensor is pre-arranged for detecting the formation and persistence of a layer of liquid on the top surface of the mass; in the case of saturation, in fact, the sewage is no longer able to traverse the mass, with consequent accumulation of liquid on top of it. The sensor that can be used for detecting the formation of the aforesaid thin layer of water may for example be a conductive sensor or a capacitive sensor, or of some other type suitable for the purpose. Conductive and capacitive sensors that can be used for this purpose are, for example, those marketed by the company M.M.T. s.r.l., Capralba (Province of Cremona), Italy (the reader is referred to the relevant technical documentation). In the case of use of a sensor of this type, the sensor itself has a support provided with electrical or fluid actuator, which can be operated to bring about raising of the sensor and subsequent extraction of the drawer. Alternatively, there may be used fixed position sensors, such as a proximity sensor, an optical sensor, a laser sensor, an ultrasound sensor, according to technologies in themselves known in the sector of contactless level sensors.

In this variant, during the cycle, the filtering mass traversed by the sewage withholds and absorbs part of the solids up to saturation point, which is highlighted by the incapacity to allow percolation of the liquid phase from the upper drawer to the underlying one. Said condition, which can be detected via successive readings made by the aforesaid sensor interfaced to a purposely provided control system (not represented) determines arrest of percolation, i.e., interruption of operation of the supply pump SP, for the purposes of subsequent replacement of the upper drawer, as explained previously, and consequent restarting of the pump SP. Obviously, a sensor having the function referred to is mounted, preferably in a removable way, in each percolation column.

In the example of embodiment, the device 1 is designed to operate at room temperature, but in other solutions there may be associated thereto a conditioning (heating/cooling) system and/or a thermostatting system, comprising, for example, an IR heating system.

The tank 4 can be provided with mechanized means to keep the sewage in motion so as to prevent sedimentation of the solid particles still contained therein, even though this is not indispensable for the purposes of implementation of the process described.

Obviously, the device may be configured to have a number of drawer containers 3 different from the one represented in the example, starting from a minimum of two.

## Claims

1. A device for obtaining and/or enriching biomasses from an organic sewage having a liquid fraction and a solid fraction, particularly a sewage of zootechnic origin, the device being of the type that provides for passage of the sewage through filtering masses, particularly filtering and aggregating masses made of a flaking material, such that the filtering masses retain at least part of the solid fraction of the sewage, **characterized in that** the device (1) has a vertically extended structure (2), substantially a tower-shaped structure, with upper supplying means (4) of the sewage and lower collecting means (6) of at least part of the liquid fraction of the sewage, the upper supplying means (4) having one or more passages (5) for the sewage and the structure (2) defining, between the upper supplying means (4) and the lower collecting means (6), a flow-path (7) along which the sewage can flow, along the flow-path (7) there being sequentially arranged in the structure (2) a plurality of drawer containers (3a-3e), each drawer container (3a-3e) having a bottom (8) provided with opening having dimensions such to retain the material forming a respective filtering mass, the drawer containers (3a-3e) extending substantially parallel to each other in a transverse direction relative to the flow-path (7) and being in superimposed positions, to be sequentially crossed at least by the liquid fraction of the sewage, the drawer containers (3a-3e) being slidingly extractable from the structure (2) to allow removal and replacement of the filtering masse that are from time to time saturated and/or variation of the position in height of the drawer containers (3a-3e) within the flow-path (7).

2. The device according to claim 1, wherein at least some drawer containers (3b-3e) of said plurality are arranged within the structure (2) such that they are displaceable in a substantially sliding fashion also in a height direction of the flow-path (7), after at least one drawer container (3a) of the plurality has been extracted from the structure (2).

3. The device according to claim 2, further comprising means (20) for the mechanized displacement of said at least some drawer containers (3b-3e) in said height direction of the flow-path (7).

4. The device according to claim 2 or 3, wherein the flow-path (7) is configured to define a plurality of positions for the drawer containers (3a-3e), among which at least one upper position, a lower position and one or more intermediate positions, and wherein the structure (2) is arranged such that extraction or insertion, relative to the flow-path (7), is only possible for the drawer containers (3a, 3e) that from time to time are in the upper position or in the lower position.

5. The device according to claim 1, further comprising
- means (ST, SP) for supplying in continuous the sewage to be treated,
- means for detecting a condition of saturation of the filtering mass contained in a first drawer container (3a), and
- control means for stopping the supply in continuous of the sewage when the said condition of saturation of the filtering mass contained in the said first drawer container (3a) is detected.

6. A process for obtaining and/or enriching at least one biomass from an organic sewage having a liquid fraction and a solid fraction, particularly a sewage of zootechnic origin, of the type in which the sewage is made to pass through filtering masses, particularly made of a flaking material, such that the filtering masses retain at least part of the solid fraction of the sewage, including the part in emulsion, and wherein each filtering mass, when saturated, is removed and replaced with a new filtering mass, each saturated filtering mass constituting a biomass, the process comprising the steps of:
- providing a vertical structure that defines a flow-path (7) for the sewage between an inlet (4) and an outlet (6);
- providing along the flow-path (7) a plurality of containers (3a-3e) that are extractable from the structure (2), each container (3a-3e) housing a respective filtering mass, the container of the plurality (3a-3e) being in superimposed positions within the flow-path (7);
- extracting at least a first container (3a) of the plurality (3a-3e) from the structure (2), to remove the saturated filtering mass thereof and replace it with a new filtering mass;
- changing the height position of other containers (3b-3e) of the plurality within the flow-path (7) and inserting a container (3a) provided with a new filtering mass in the structure (2), in a height position differing from the position previously occupied by said first container (3a).

7. The process according to claim 6, wherein the flow-path (7) is configured to define a plurality of height positions for the containers of the plurality (3a-3e), among which an upper position, a lower position and one or more intermediate positions, and wherein the containers of the plurality (3a-3e) are adapted to occupy from time to time different height positions within the flow-path (7), the process comprising the operations of:
- extracting from the flow-path (7) the first container (3a) of the plurality (3a-3e), that occupies the said upper position, when the corresponding filtering mass is saturated;
- raising the other containers (3b-3e) of the plurality along the flow-path (7), such that the said upper position becomes occupied by the containers (3b) of the plurality (3a-3e) being successive to the container (3a) which has been extracted from the flow-path (7) and the last container (3e) of the series frees the said lower position;
- inserting in the structure (2), in said lower position, a container (3a) provided with a new filtering mass, such as for example the previously extracted container, after the filtering mass thereof has been replaced.

8. The process according to claim 6 or 7, wherein at least one of the sewage supplied to the flow-path (7) and the material forming a filtering mass is made to undergo an enzymatic or bacterial bio-activation, particularly by addition of a fungi and bacteria consortium.

9. The process according to claim 6 or 7, wherein the filtering masses are formed by a flaking material, preferably of vegetable origin.

10. The process according to claim 6, wherein:
- the sewage to be treated is supplied in continuous,
- the detection is provided of the condition of saturation of the filtering mass contained in a first container (3a), and
- the supply in continuous of the sewage is stopped when the condition of saturation of the filtering mass contained in said first container (3a) is detected,
where in particular, when said condition of saturation is detected, a cycle of replacement of the first container (3a) in the structure (2) is started.
